# EUROPÄISCHE PATENTSCHRIFT

(11) **EP 1 219 502 B1**
(45) Veröffentlichungstag und Bekanntmachung des Hinweises auf die Patenterteilung: **24.08.2005**
(21) Anmeldenummer: 01130896.2
(22) Anmeldetag: 27.12.2001
(51) Int. Cl.: B60R 21/16

(54) **Gassackmodul**
Air bag module
Module de sac de sécurité gonflable

(30) Priorität: 28.12.2000 DE 20022016 U
(43) Veröffentlichungstag der Anmeldung: 03.07.2002
(73) Patentinhaber: TRW Automotive Safety Systems GmbH, 63743 Aschaffenburg (DE)
(72) Erfinder: Bohn, Stefan, 63773 Goldbach (DE)
(74) Vertreter: Kitzhofer, Thomas

(56) Entgegenhaltungen:
- DE-A- 2 552 815
- US-A- 4 828 286
- US-A- 5 125 682

## Beschreibung

Die Erfindung betrifft ein Gassackmodul mit einem Gassack, wobei eine Außenkontur des Gassacks durch eine Gassackwand definiert ist, die eine Vorderwand zum Aufprall des Insassen mit einer zentrischen Öffnung als Übergang zu einer Einbuchtung aufweist, wobei die Einbuchtung dadurch gebildet ist, daß ein Zentrumsabschnitt der Gassackwand beim Aufblasen an einer freien Bewegung gehindert und zurückgehalten wird.

Derartige ringförmige Gassäcke haben den Vorteil, daß der Zentrumsabschnitt an einer freien, vorzugsweise an jeglicher Bewegung in Richtung zum Insassen gehindert wird, indem er am Modul befestigt bleibt. Die Rückhaltung erfolgt über die ringförmige Vorderwand um die Einbuchtung herum. Der Gassack hat üblicherweise eine ringförmige, sich um die Einbuchtung herum erstreckende und mit Gas zu befüllende Kammer. Die Öffnung als Übergang zu der Einbuchtung sollte möglichst klein sein.

Ein Gassackmodul gemäß dem Oberbegriff des Anspruchs 1 ist aus US 5 125 682 A bekannt.

Die Erfindung schafft ein Gassackmodul, bei dem die Einbuchtung wenigstens teilweise, vorzugsweise sogar vollständig geschlossen wird. Dies wird bei einem Gassackmodul der eingangs genannten Art dadurch erreicht, daß ein Verschlußteil, welches die Einbuchtung oder die Öffnung umschließt, und ein Zugmittel, das mit dem Verschlußteil verbunden ist, vorgesehen sind. Das Zugmittel ist so befestigt, daß durch die Entfaltung des Gassacks eine Zugkraft auf es ausgeübt und die Zugkraft auf das Verschlußteil weitergeleitet wird. Die Einbuchtung oder die Öffnung werden dadurch wenigstens teilweise geschlossen.

Beim erfindungsgemäßen Gassackmodul ist vorzugsweise im Bereich des Überganges der Vorderwand zur Einbuchtung, d.h. der Öffnung, oder im Bereich der Einbuchtung möglichst nahe an der Vorderwand ein Verschlußteil vorgesehen, das durch das Zugmittel betätigt wird und die Öffnung oder die Einbuchtung wenigstens großteils schließt. Die Verschlußkraft wird durch den Gassack selbst, nämlich durch den Entfaltungsvorgang erzeugt. Die Öffnung in der Vorderwand oder die Einbuchtung hat damit eine wesentlich geringere offene Querschnittsfläche als bei einem ohne Verschlußteil und ohne Zugmittel, ansonsten aber identisch ausgebildeten Gassack.

Vorzugsweise ist das Zugmittel einerseits an der Gassackwand und andererseits mit dem Verschlußteil verbunden. Die Gassackwand verschiebt sich beim Entfaltungsvorgang, so daß das Zugmittel relativ zur Gassackwand bewegt wird, wodurch die zum Betätigen des Verschlußteils erforderliche Zugkraft entsteht.

Das Zugmittel erstreckt sich im vollständig aufgeblasenen Zustand des Gassacks vorzugsweise schräg nach außen zu einem seitlichen Abschnitt der Gassackwand, an dem es befestigt ist. Diese Ausbildung sorgt dafür, daß durch das Zugmittel keine Vertiefung oder Einbuchtung im Bereich der Öffnung entsteht, wenn das Zugmittel nämlich als Fangband wirken würde.

Das Zugmittel kann außerhalb des Gassacks, an der Gassackwand verlaufend angeordnet sein oder, gemäß der bevorzugten Ausführungsform im Inneren des Gassacks, also in der aufzublasenden Kammer, angeordnet sein, wodurch für den Insassen eine relativ glatte Außenwand zur Rückhaltung zur Verfügung steht.

Das Verschlußteil ist vorzugsweise ein die Einbuchtung oder die Öffnung umgebendes Band oder Seil.

Ferner ist vorzugsweise in der Gassackwand eine Führung vorgesehen, in der das Verschlußteil verschiebbar zur Gassackwand aufgenommen ist, ähnlich einem Sack, dessen Öffnungsrand umgeschlagen und vernäht ist, so daß über ein darin aufgenommenes Seil der Sack zugezogen werden kann.

Bevorzugt sind Verschlußteil und Zugmittel einstückig ausgeführt, vorzugsweise als ein Band oder ein Seil.

Weitere Merkmale und Vorteile der Erfindung ergeben sich aus der Beschreibung und den folgenden Zeichnungen, auf die Bezug genommen wird. In den Zeichnungen zeigen:
Figur 1 eine Querschnittsansicht durch eine Ausführungsform des erfindungsgemäßen Gassackmoduls bei noch nicht vollständig aufgeblasenem Gassack und
Figur 2 einen Querschnitt durch das Gassackmodul nach Figur 1 bei fast vollständig aufgeblasenem Gassack.

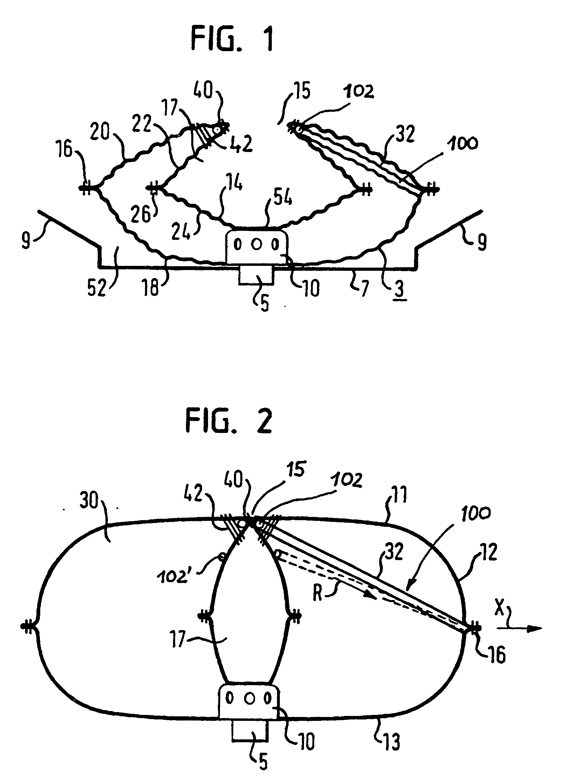

In Figur 1 ist ein Gassackmodul dargestellt, das einen Gassack 3, einen Gasgenerator 5 und ein Modulgehäuse 7 mit einer Modulabdeckung 9 in Form von Klappen aufweist. Der Gasgenerator 5 wird von einem topf- oder glockenförmigen Diffusor 10 umgeben, der von oben über den Gasgenerator gestülpt ist und am Modul, genauer am Modulgehäuse 7 befestigt ist. Anstatt des Diffusors 10 kann jedoch auch ein anderes, den Gasgenerator 5 umgebendes, modulfestes Bauteil vorgesehen sein.

Der Gassack, der ein im Lenkrad oder Armaturenbrett angeordneter Front-Gassack ist, hat eine Gassackwand, die aus mehreren Abschnitten besteht. Eine dieser Abschnitte ist die im aufgeblasenen Zustand (Figur 2) dem Insassen zugewandte Vorderwand 11, auf die dieser im Rückhaltefall prallen kann. Darüber hinaus sind ein umlaufender, seitlicher Abschnitt 12 und eine Rückwand 13 vorgesehen. Die Vorderwand hat eine zentrische Öffnung 15, von der aus die Gassackwand nach innen, zum Diffusor 10 verläuft, so daß sich eine tiefe Einbuchtung, die üblicherweise von außen her offen ist und mit dem Bezugszeichen 17 versehen ist, ergibt. Die die Einbuchtung definierende Gassackwand wird mit 14 bezeichnet. Die Öffnung 15 bildet den Übergang Vorderwand 11 zu Einbuchtung 17.

Üblicherweise besteht der Gassack aus verschiedenen Gewebeteilen, nämlich zwei äußeren, ringförmigen, mit der umlaufenden Naht 16 vernähten Gewebeteilen 18 und 20 sowie zwei inneren Gewebeteilen 22, 24, die an der umlaufenden Naht 26 miteinander verbunden sind, wobei das Gewebeteil 22 am Rand der Öffnung 15 mit dem Gewebeteil 20 vernäht ist.

Die Einbuchtung 17 wird dadurch gebildet, daß der unterste Teil (Zentrumsabschnitt 54) des Gewebeteils 24 bleibend an dem Diffusor 10 befestigt ist und im Rückhaltefall, beim Aufblasen an einer Bewegung nach außen gehindert wird.

Durch die Einbuchtung 17 entsteht eine ringförmige, mit Gas zu befüllende Kammer 30, wobei die Einbuchtung aber nicht aufgeblasen wird.

Im Inneren der Kammer 30 ist ein Seil oder Zugband 32 angeordnet, welches mit seinen freien Enden zwischen den Gewebelagen 18, 20 angeordnet und durch die Naht 16 an der Gassackwand befestigt wird. Damit ist das Zugband am seitlichen Abschnitt 12 der Gassackwand angebracht. Es erstreckt sich, bezogen auf den vollständig aufgeblasenen Zustand, schräg aufwärts zur Öffnung 15, wo es um den Rand der Öffnung 15 herum verläuft und in einer Führung in der Gassackwand im Bereich des Randes der Öffnung 15 verschiebbar zur Gassackwand aufgenommen ist, ähnlich einem Verschlußseil, das am Rande eines Sackes eingenäht ist. Die Führung wird dadurch gebildet, daß auf der radialen Innenseite eine erste Verbindungsnaht 40 umläuft, mit der die Gewebelagen 20, 22 vernäht sind. Radial mit Abstand von dieser Naht 40 verläuft eine zweite Naht 42 um die Öffnung herum, wobei diese Naht umfangsmäßig nicht ganz geschlossen ist, damit das Zugband 32 aus der Führung herauslaufen kann.

Der Abschnitt des Zugbandes 32, der außerhalb der Führung verläuft, wird als Zugmittel 100 und der Abschnitt innerhalb der Führung, der die Öffnung 15 umgibt, als Verschlußteil 102 bezeichnet.

Das Gassackmodul arbeitet im Rückhaltefall folgendermaßen: Über den Gasgenerator 5 wird Gas in die Kammer 30 eingebracht, so daß der sich entfaltende Gassack die Abdeckung 9 nach außen drückt. Es entsteht eine ringförmige Austrittsöffnung 52, über die der Gassack das Modul verlassen kann. Nicht gezeigt ist ein kreisförmiges Mittelteil der Abdeckung, das oberhalb des Zentrumsabschnitts 54 an ihm anliegt und am Diffusor 10 bleibend befestigt ist, so daß es nicht beim Öffnen der Abdeckung 9 nach außen schwenkt.

Der Gassack entfaltet sich weiter in Richtung zum Insassen, wobei sich die ringförmige Vorderwand 11 zunehmend zum Insassen bewegt, jedoch noch eine große Öffnung 15 aufweist. Dadurch, daß das Zugband 32 einen längeren Abschnitt der Gassackwand überbrückt, wird auf das Zugband 32 eine Zugkraft ausgeübt, unter anderem deshalb, weil der seitliche Abschnitt 12 der Gassackwand bestrebt ist, nach außen in Richtung X weiter auszubauchen. Durch die Zugkraft verschiebt sich das Zugband 32 in Richtung des Pfeiles R und zieht die Öffnung 15 vollständig oder nahezu vollständig zu, wie dies in Figur 2 dargestellt ist.

Dem Insassen präsentiert sich damit eine fast oder sogar vollständig geschlossene Vorderwand 11.

Das Zugband 32 könnte auch außerhalb der Kammer 30 angeordnet sein und durch die sich nach außen wölbende Gassackwand verschoben werden, um das Verschließen der Öffnung 15 zu erreichen. Darüber hinaus könnten auch zwei oder mehrere an der Einbuchtung 17 gegenüberliegend angeordnete Fangbänder vorgesehen sein, damit der Gassack eine symmetrische Gestalt hat.

Das Verschlußteil 102 muß auch nicht die Öffnung unmittelbar am Übergang der Vorderwand 11 zur Einbuchtung 17 umschlingen, denn es könnte auch beispielsweise im obersten Drittel der Einbuchtung das Gewebeteil 22 umgeben (siehe mit unterbrochenen Linien in Figur 2 angedeutetes Verschlußteil 102') und so die Einbuchtung nahe an der Öffnung 15 schließen.

## Patentansprüche

1. Gassackmodul, mit einem Gassack (3), wobei eine Außenkontur des Gassacks durch eine Gassackwand definiert ist, die eine Vorderwand (11) zum Aufprall des Insassen mit einer zentrischen Öffnung (15) als Übergang zu einer Einbuchtung (17) aufweist, wobei die Einbuchtung (17) **dadurch** gebildet ist, daß ein Zentrumsabschnitt (54) der Gassackwand beim Aufblasen an einer freien Bewegung gehindert und zurückgehalten wird,
**gekennzeichnet durch**
ein Verschlußteil (102), das die Einbuchtung (17) oder die Öffnung (15) umschließt und an der Gassackwand angreift, und ein Zugmittel (100), das mit dem Verschlußteil verbunden ist,
wobei das Zugmittel (100) so befestigt ist, daß **durch** die Entfaltung des Gassacks (3) eine Zugkraft auf es ausgeübt wird und die Zugkraft auf das Verschlußteil (102) weitergeleitet und die Einbuchtung (17) oder die Öffnung (15) wenigstens teilweise geschlossen wird.

2. Gassackmodul nach Anspruch 1, **dadurch gekennzeichnet, daß** das Zugmittel (100) einerseits an der Gassackwand und andererseits mit dem Verschlußteil (102) verbunden ist.

3. Gassackmodul nach einem der vorhergehenden Ansprüche, **dadurch gekennzeichnet, daß** das Zugmittel (100) im vollständig aufgeblasenen Zustand des Gassacks (3) schräg nach außen zu einem seitlichen Abschnitt (12) der Gassackwand verläuft, an dem es befestigt ist.

4. Gassackmodul nach einem der vorhergehenden Ansprüche, **dadurch gekennzeichnet, daß** das Zugmittel (100) im Inneren des Gassacks (3) angeordnet ist.

5. Gassackmodul nach einem der vorhergehenden Ansprüche, **dadurch gekennzeichnet, daß** das Verschlußteil (102) ein die Einbuchtung (17) oder die Öffnung (15) umgebendes Band oder Seil ist.

6. Gassackmodul nach einem der vorhergehenden Ansprüche, **dadurch gekennzeichnet, daß** das Verschlußteil (102) in einer in der Gassackwand vorgesehenen Führung verschiebbar zur Gassackwand aufgenommen ist.

7. Gassackmodul nach einem der vorhergehenden Ansprüche, **dadurch gekennzeichnet, daß** das Verschlußteil (102) und das Zugmittel (100) einstückig miteinander verbunden sind.

## Claims

1. A gas bag module, comprising a gas bag (3), an outer contour of the gas bag being defined by a gas bag wall which has a front wall (11) for the impact of the occupant with a centric opening (15) as a transition to an indentation (17), the indentation (17) being formed in that during inflation a center portion (54) of the gas bag wall is prevented from freely moving and is restrained,
**characterized by**
a closure part (102) which encloses the indentation (17) or the opening (15) and engages the gas bag wall, and a traction means (100) which is connected with the closure part,
the traction means (100) being attached such that due to the deployment of the gas bag (3) a tensile force is exerted on the traction means and the tensile force is passed on to the closure part (102), and the indentation (17) or the opening (15) is at least partly closed.

2. The gas bag module as claimed in claim 1, **characterized in that** the traction means (100) is, on the one hand, connected to the gas bag wall and, on the other hand, with the closure part (102).

3. The gas bag module as claimed in either of the preceding claims, **characterized in that** in the completely inflated condition of the gas bag (3) the traction means (100) runs obliquely outwards to a lateral portion (12) of the gas bag wall and is attached to the lateral portion (12).

4. The gas bag module as claimed in any of the preceding claims, **characterized in that** the traction means (100) is disposed in the interior of the gas bag (3).

5. The gas bag module as claimed in any of the preceding claims, **characterized in that** the closure part (102) is a strap or rope surrounding the indentation (17) or the opening (15).

6. The gas bag module as claimed in any of the preceding claims, **characterized in that** the closure part (102) is accommodated in a guideway provided in the gas bag wall so as to be movable in relation to the gas bag wall.

7. The gas bag module as claimed in any of the preceding claims, **characterized in that** the closure part (102) and the traction means (100) are integrally connected with each other.

## Revendications

1. Module de coussin à gaz, comportant un coussin à gaz (3), un contour extérieur du coussin à gaz étant défini par une paroi de coussin à gaz, laquelle présente une paroi antérieure (11) pour l'impact du passager avec une ouverture (15) centrée servant de transition vers un creux (17), le creux (17) étant formé par le fait que lors du gonflage, un tronçon central (54) de la paroi de coussin à gaz est empêché de se mouvoir librement et est retenu,
**caractérisé par**
une partie de fermeture (102) qui entoure le creux (17) ou l'ouverture (15) et qui s'engage sur la paroi de coussin à gaz, et par un moyen de traction (100) qui est relié à la partie de fermeture,
le moyen de traction (100) étant fixé de telle sorte que par le déploiement du coussin à gaz (3), une force de traction est exercée sur le moyen de traction et la force de traction est transmise à la partie de fermeture (102), et le creux (17) ou l'ouverture (15) est fermé(e) au moins partiellement.

2. Module de coussin à gaz selon la revendication 1, **caractérisé en ce que** le moyen de traction (100) est relié d'une part à la paroi de coussin à gaz et d'autre part à la partie de fermeture (102).

3. Module de coussin à gaz selon l'une des revendications précédentes, **caractérisé en ce qu'**à l'état totalement gonflé du coussin à gaz (3), le moyen de traction (100) s'étend en oblique vers l'extérieur en direction d'un tronçon (12) latéral de la paroi de coussin à gaz sur lequel il est fixé.

4. Module de coussin à gaz selon l'une des revendications précédentes, **caractérisé en ce que** le moyen de traction (100) est agencé à l'intérieur du coussin à gaz (3).

5. Module de coussin à gaz selon l'une des revendications précédentes, **caractérisé en ce que** la partie de fermeture (102) est un ruban ou un câble entourant le creux (17) ou l'ouverture (15).

6. Module de coussin à gaz selon l'une des revendications précédentes, **caractérisé en ce que** la partie de fermeture (102) est reçue dans un guidage prévu dans la paroi de coussin à gaz de façon à pouvoir être déplacée par rapport à la paroi de coussin à gaz.

7. Module de coussin à gaz selon l'une des revendications précédentes, **caractérisé en ce que** la partie de fermeture (102) et le moyen de traction (100) sont reliés d'un seul tenant l'une à l'autre.
